Europäisches Patentamt

European Patent Office

Office européen des brevets

(11) Publication number: **0 511 545 A2**

# EUROPEAN PATENT APPLICATION

(21) Application number: **92106415.0**

(22) Date of filing: **14.04.92**

(51) Int. Cl.5: **C04B 28/32**, //(C04B28/32, 14:28,18:26),(C04B28/32,14:04, 14:28)

(30) Priority: **30.04.91 IT VR910038**

(43) Date of publication of application:
**04.11.92 Bulletin 92/45**

(84) Designated Contracting States:
**AT BE DE ES FR GB IT NL PT**

(71) Applicant: **Antolini, Daniele**
**Via Capovilla, 34**
**I-37031 Illasi (Verona)(IT)**
Applicant: **Bellorio, Daniele**
**Via Villa 22 bis**
**I-37030 Mezzane di Sotto (Verona)(IT)**
Applicant: **Liuti, Paolo**
**Via G. Pascoli, 8**
**I-37036 S. Martino Buon Albergo (Verona)(IT)**

(72) Inventor: **Antolini, Daniele**
**Via Capovilla, 34**
**I-37031 Illasi (Verona)(IT)**
Inventor: **Bellorio, Daniele**
**Via Villa 22 bis**
**I-37030 Mezzane di Sotto (Verona)(IT)**
Inventor: **Liuti, Paolo**
**Via G. Pascoli, 8**
**I-37036 S. Martino Buon Albergo (Verona)(IT)**

(74) Representative: **Petraz, Gilberto Luigi et al**
**GLP S.r.l. Piazzale Cavedalis 6/2**
**I-33100 Udine(IT)**

(54) **Marble-like artificial material, process for producing such material and blocks realized with such material.**

(57) The material according to the invention is realised starting from a mixture which is suitable for being cast into molds of any type and dimensions, said mixture being formed by an extra-fine powder of magnesic cement in a ratio ranging from 10% and 45% and another inert material, e.g. ventilated and/or granulated calcium carbonate and/or quartz powder up to saturation of said ratio, said components being mixed to magnesium chloride in a water solution having a density ranging from 1,1 to 2, said density having an advantageous value of 1,26.

Organic materials (e.g. wood dust, sawings, Xieselgur or pumice fine flours) could be added to said mixture in order to absorb any actual excess of magnesium chloride.

Such material may very easily be produced by casting it into molds, and it can be used as artificial marble as soon as it is dry.

According to an advantageous form of embodiment of the invention, the material may be suitably coloured and comprises a series of veins reproducing the typical veins of marble, said veins being obtained by adding to the mixture, during the casting into the molds, a suitable dye of any type and colour, e.g. a dye which is compatible to water such as a distemper, which is spread in the mold forming veins having an appearance which is absolutely similar to that of natural marble veins.

EP 0 511 545 A2

The present invention relates to a marble-like artificial material.

More particularly, the present invention relates to a material having aesthetical and mechanical characteristics similar to those of marble, though being easily and economically producible on industrial scale.

Furthermore, the present invention relates to a process for producing such material.

Finally, the present invention relates to the production of blocks formed by such material, said blocks being mainly used for building pedestals of cups, trophys and prize-awarding articles.

The invention may be mainly applied in the field of marble-transforming industry.

Several techniques are known for producing agglomerates constituting marble-like artificial materials.

According to one of these techniques a mixture contituted by marble powder and resin is produced; thereafter, said mixture is cast into molds.

The product which is removed from the molds should be thereafter painted in order to obtain the aesthetical characteristics which are typical of marble.

Another material which imitates marble is produced by firstly mixing extra-fine calcined magnesia (magnesium oxyde) with water, thereby obtaining a mixture which may be cast into molds.

Then, granulated marble powder, calcium sulphate and a small quantity of magnesium chloride are added to the mixture until a new mixture is obtained in which the components cited above are in the respective ratios of 66% calcined magnesia, 20% marble powder and 14% calcium sulphate.

This kind of mixture is then cast into enamelled iron molds or into glass sheets and it is let dry.

The finished product has mechanical characteristics similar to those of marble; however, it is neither economically profitable, nor aesthetically valuable, since it must be treated for many days in a wet carbon dioxide environment and, notwithstanding this, it often shows white superficial efflorescences.

The marble-typical veins may not, in this case, be effectively reproduced.

There are marble application fields in which the aesethical characteristics of the material assume a fundamental importance for appraising the finished product.

This is the case, for instance, of pedestals for cups, trophys and various prize-awarding articles, for which a lower importance is given the phisical characteristics, except the weight; on the contrary, the general appearance of the pedestal has a great importance, since it has to be sight-pleasing and to confer a glamour to the object supported on it.

For this reason, several solutions adopting a marble imitating material have been discarded by the background art since, by way of example, the resin-based materials which are cast into molds must be necessarily painted after their removal from the molds and involve several problems since resin undergoes thermal deformations, thereby causing high costs and the results are not long lasting, while calcined magnesia-based materials do not feature an aesthetical appearance corresponding to the required standards for these applications.

On the other hand, the production of pure marble pedestals for cups and trophys involves further disadvantages, since a marble pedestal requires:

- a block to be cut starting from bars,
- the five visible sides to be smoothed;
- the edges to be chamfered;
- the base to be drilled, and
- the final pedestal to be painted.

In the case where the pedestal is machined starting from marble slabs, a small block should be fistly cut therefrom, it must be then squared up to size, drilled, the five visible sides must be polished and the edges chamfered.

All these operations cause a great waste of time and money.

In order to complete the present disclosure, we may remark, yet, that pedestals for cups and trophys are also realized by means of an agglomerate constituted by saw dust, wood powder and thermosetting resins, said agglomerate requiring the respective operations of sawing, drilling, stopping and lacquering; however, this kind of product is hardly used owing to its low specific weight, which causes the product to be often unsuitable for supporting cups or trophys.

It is the main purpose of the present invention that of obviating to the drawbacks and disadvantages which are typical of the prior art, and to provide, thus, for a marble-like artificial material which exactly reproduces both the phisical and the aesthetical characteristics of marble.

This is achieved by means of a material having the features disclosed in the main claim.

The dependent claims disclose advantageous forms of embodiment of the invention.

The invention has the further purpose of providing for a process suitable for producing a marble-like artificial material.

This is achieved by carrying out the features disclosed in claim 4.

The claims dependent on claim 4 disclose advantageous forms of embodiment of said process.

Finally, the invention aims to provide for a block made of a marble-like artificial material which is particularly suitable for being used as pedestal for cups, trophys or prize-awarding articles.

This is achieved by means of a block having the features disclosed in claim 9.

The claims dependent on claim 9 disclose advantageous forms of embodiment of such block.

The material according to the invention is realised starting from a mixture which is suitable for being cast into molds of any type and dimensions, said mixture being formed by an extra-fine powder of magnesic cement in a ratio ranging from 10% and 45% and another inert material, e.g. ventilated and/or granulated calcium carbonate and/or quartz powder up to saturation of said ratio, said components being mixed to magnesium chloride in a water solution having a density ranging from 1,1 to 2, said density having an advantageous value of 1,26.

Organic materials (e.g. wood dust, sawings, Xieselgur or pumice fine flours) could be added to said mixture in order to absorb any actual excess of magnesium chloride.

Such material may very easily be produced by casting it into molds, and it can be used as artificial marble as soon as it is dry.

According to an advantageous form of embodiment of the invention, the material may be suitably coloured and comprises a series of veins reproducing the typical veins of marble, said veins being obtained by adding to the mixture, during the casting into the molds, a suitable dye of any type and colour, e.g. a dye which is compatible to water such as a distemper, which is spread in the mold forming veins having an appearance which is absolutely similar to that of natural marble veins.

In the process according to the invention, the dye is cast into the mold by means of one or more dispensing nozzles; thus, the dye is injected into the mixture during the casting operation.

Therefore, thanks to the addition of magnesium chloride, the dry material which is removed from the mold is as glazed as marble and has the veins and stains typical of marble; thus, such material has an aesthetical appearance that may absolutely be confused with that of marble.

Since the fundamental physical properties of the material are comparable to those of marble, the purposes of the invention are then achieved.

In this respect, it may be noted that, contrary to known marble-like artificial materials, the magnesic cement is here used as extra-fine powder instead of granules or scabblings, and the production process does not require any treatment in a controlled environment following to the removal of the material from the molds.

In fact, the material which is removed from the molds only requires to be brushed after being weathered and it is immediately ready for its predetermined use; it does not require any further painting operation.

According to the invention, the material produced by means of the process described above may effectively be used for realising blocks which may advantageously, but not uniquely be used for building pedestals for cups, trophys and other prize-awarding articles, and this thanks to the amazing similarity of the material with natural marble.

A cup pedestal may be produced by means of said material by solely providing for a mold reproducing the shape and the dimensions of the pedestal, and then casting into it the mixture described above.

Such pedestal provides for a plurality of advantages, both from the technical and from the economical points of view, relative to a traditional marble pedestal since, while the aesthetical and physical characteristics of marble are actually kept unchanged, the pedestal according to the invention is suitable for being mass-produced, its five visible sides being already finished when the pedestal is removed from the mold, the pedestal being already provided with cup-fixing bores, chamfered and coloured in any color tone, depending on the used dies.

Furthermore, the pedestal may be produced in such a way as to remarkably simplify the following cup-assemblying operations, since enough large cup-fixing holes may be provided for enabling the passage of nuts and bolts; on the contrary, traditional marble pedestals require a drilling operation which in any case involves a remarkable waste of time and which, on grounds of time and wear of the used drilling tool, involves the production of small holes causing apparent difficulties for the insertion of nuts and bolts.

The material according to the invention has a particularly advantageous form of embodiment in the production of pedestals for cups.

However, it may be used in an aesthetically and economically advantageous way also for the mass-production of other articles made of artificial marble which are traditionally hand-made or by means of several machine tools, e.g. paper-holders, ashtrays, penholders, pots etc..

**Claims**

1. Marble-like artificial material obtained by removal from a casting mold, characterised in that it is constituted by a mixture of magnesic cement in a first ratio ranging between 10% and 50% and another inert material, e.g. calcium carbonate, in the form of an extra-fine powder in a second ratio suitable for saturating said first ratio, whereby magnesium chloride in a water solution, having a density ranging between 1,1 and 2, is added to said mixture.

**2.** Material according to claim 1, characterised in that said magnesium chloride solution has a density of about 1,26.

**3.** Material according to anyone of the preceding claims, characterised in that it is provided with veins or stains which are obtained by mixing suitable dyes to said mixture.

**4.** Process for obtaining a marble-like artificial material, characterised by the following working steps:

a) providing a mixture formed by magnesic cement in the form of extra-fine powder, in a first ratio ranging between 10% and 50%, another inert material, e.g. ventilated and/or granulated calcium carbonate, in a second ratio suitable for saturating said first ratio, and magnesium cloride in a water solution having a density ranging between 1,1 and 2;

b) casting said mixture into molds of any shape and/or dimensions and/or material;

c) drying and dessiccating the material which is present in the molds;

d) removing the material from said molds.

**5.** Process according to claim 4, characterised in that the ratio of magnesic cement in said mixture is about 33%.

**6.** Process according to anyone of claims 4 and 5, characterised in that said step b) is carried out at the same time as the injection into said molds of a dye suitable for forming veins or stains in the material.

**7.** Process according to anyone of claims 4 to 6, characterised in that said step d) is followed by a step e) in which the material is brushed and weathered.

**8.** Process according to anyone of claims 4 to 7, characterised in that said magnesium chloride solution has a density of about 1,26.

**9.** Block made of a marble-like artificial material, characterised in that it is realised with a material according to the one described in anyone of claims 1 to 3, or it is realised by carrying out a process according to the one described in anyone of claims 4 to 8.

**10.** Block according to claim 9, used as pedestal for cups, trophys or other prize-awarding articles, characterised in that the mold which is used for producing said block is provided with curved areas suitable for forming bevels in the finished product, and with at least one through-hole suitable for cooperating, in operation, with suitable means for fastening said pedestal to said cup or trophy.

**11.** Block according to claim 10, characterised in that it has a supstantially parallelepipedic shape, the five sides of said block which contact the mold being already glazed when removed from the mold.

**12.** Block according to claim 9, characterised in that it is used as paper-holder, ashtray, penholder, pot or similar articles.